# EUROPEAN PATENT SPECIFICATION

(11) **EP 1 421 392 B1**
(45) Date of publication and mention of the grant of the patent: **25.06.2008**
(21) Application number: 02740448.2
(22) Date of filing: 05.04.2002
(51) Int. Cl.: G01N 35/00, B01J 19/00, B65G 1/00

(54) **PROCESS FOR ANALYZING AND ARCHIVING OF MATERIALS**
PROZESS ZUR ANALYSE UND ARCHIVIERUNG VON MATERIALIEN
PROCEDE D'ANALYSE ET D'ARCHIVAGE DE MATERIAUX

(30) Priority: 06.04.2001 DE 10117274
(43) Date of publication of application: 26.05.2004
(73) Proprietor: HTE Aktiengesellschaft The High Throughput Experimentation Company, 69123 Heidelberg (DE)
(72) Inventor: SCHUNK, Stephan, Andreas, 69117 Heidelberg (DE); KLEIN, Jens, 69124 Heidelberg (DE); ZECH, Torsten, 69124 Heidelberg (DE); HÖNICKE, Dieter, 76227 Karlruhe (DE)
(74) Representative: Ricker, Mathias
(86) International application number: PCT/EP2002/003818
(87) International publication number: WO 2002/082094

## Description

The present invention relates to a process for the analysis and archiving of material libraries.

One of the main challenges in combinatorial chemistry and in the application of high throughput methods is the integrated manufacture, testing and archiving of samples within an established process. In the numerous processes published so far, the latter steps are merely insufficiently integrated and thus are hard to automate in their entirety. In particular, such steps are problematic, in which the building blocks of a material library have to be transferred from one vessel to another vessel between single process steps, in particular if a so-called change of format occurs, which is relevant, for example, in a material library which becomes larger or smaller.

Processes in the area of materials science which allow for the manufacture of materials and a subsequent testing of the latter for useful properties are known. These processes merely comprise the manufacture of samples and the test for useful properties of those samples. However, in all of these processes, typical process steps are combined with the transfusion of samples into suitable sample, manufacturing, and testing tubes, as, for example, arrays, liners (cartridges) and microtiter plates. As an exception, only samples which are sputtered onto a wafer may be mentioned, with the latter process being expensive and highly sophisticated concerning the apparatuses needed. However, in the latter process it is not described how individual bodies may be transferred between the individual process steps by using suitable process means and suitable technology.

WO 00/51720 gives a detailed description of the composition of a microreactor composed of several layers (laminae). Functional items, such as for example the feeding of fluids, removal of educts etc. are defined by means of single or several layers. In one embodiment, the material library is introduced as single laminae, with the latter consisting of a silicon wafer having spatially separated materials, which are sputtered onto the wafer. By means of this particular setup of the entire system, each material contained in a cavity constitutes a micro reactor. This construction is a result of the technique employed for the synthesis (chemical vapor deposition), the materials are accumulated spatially separated on plane surfaces. However, a change of the library can only be accomplished by means of disintegrating the entire reactor. A change of individual building blocks of the library or a choice or grouping of building blocks is not possible using such kinds of devices.

The publication WO 00/29844 also describes a micro reactor system which is characterized in that the active masses may be synthesized directly inside of the reactor (the fluid exit is blocked on synthesis and reopened after the subsequent treatment), or that the particular cavities may be filled up with materials.

However, the processes specified hereinabove do not contain a teaching how the manufacture, identification, and testing for suitable properties, as well as the archiving of several hundred or more samples in an integrated and automated manner, using a multi-functional unit comprising the sample vials, can be accomplished simultaneously.

Also, in the "biohotels" and "auto samplers or auto analyzers" known from patent literature, merely a part of the process steps to be used, namely the storage of samples before being tested for suitable properties, is covered. In most of the cases, the sample is discarded after the test procedure. A further disadvantage is embodied by the fact that such devices in most cases are merely suitable to host fluid biological or organic samples, whereas they are not suitable for inorganic libraries.

The documents US 5,773,662 and US 4,276,258, as well as WO 00/24511 show in an exemplified manner, how a multiplicity of samples (vials) can be stored in storage containers (trays) and be subjected to analysis by using robots. The above-mentioned WO document describe a corresponding method using extremely small amounts of sample (micro droplets).

US 6 063 633 describes a method of simultaneously testing a plurality of catalyst formulations to determine comparative catalytic activity of the formulations to determine comparative catalytic activity of the formulations in the presence of a given reactant or reactant mixture comprising the steps of (a) supporting said plurality of catalyst formulations on at least one support; (b) fixing said formulations on said at least one support by optionally stabilizing said formulations; (c) contacting said formulations with a common stream of the reactant or reactant mixture under reaction conditions in a common reactor chamber; and (d) detecting comparative catalytic activity occurring a each of said formulations during said contacting step through substantially simultaneously sensing radiation emitted, absorbed, or altered by the respective formulations. reactants or products indicative of catalyst activity using a detector separated from the formulations, reactants and products.

WO 02/43860, whichis prior art under Art. 54(3) EPC for the present invention relates to a precess for the synthesis of large libraries of materials of multicomponent systems, in which all mixtures of binary to polynary systems are synthesized reapidly and arbitrarily in the multicomponent system. Combining an inventive library of materials with an inventive test for performance characteristic extremely accelerates the screening of a large number of novel materials.

In summary, it is a result that none of the processes which have been published so far allows for the handling of the building blocks of the library in a suitable sample container for all process steps.

Therefore, it was a problem of the present invention to provide a process for the analysis and archiving and, optionally, for the manufacture of material libraries, which in comparison to the processes mentioned above renders an additional transfusing of building blocks from one or several material libraries between those single process steps superfluous, thereby accelerating the analysis and archiving of material libraries, or, respectively, optimizing the latter, i.e. to allow the entire process to run in an integrated manner.

The latter and further problems are solved by the process for the analysis and archiving of at least one material library according to claim 1.

In a preferred embodiment, the process according to the invention comprises a further step (0), which may be optionally conducted in addition to steps (1), (2), (3), and (4):
(0) Manufacture of at least two building blocks.

In order to manufacture the at least two building blocks, which is preferably a multiplicity of building blocks, all manufacturing processes known to the person skilled in the art may be applied. Such manufacturing processes are known, for example, from combinatorial materials science. In particular, it is hereby referred to the "process for the manufacture of a multiplicity of building blocks of a material library" which is described in the German patent application DE-A 100 59 890.0. It is hereby also referred to the manufacturing process of the German patent application DE-A 100 42 871.1, as well as to the international publication WO 99/59716.

In a further preferred embodiment, the process according to the invention contains the following further step (a), which may be used as an option to steps (1), (2), (3) and (4):
(a) Sealing of the at least one multifunction device.

The multifunction device may be sealed after or, respectively, during the particular steps of the process according to the invention.

In a further preferred embodiment the process according to the invention comprises the following further step (b) which may be conducted as an option to steps (1), (2), (3), (4), and optionally in addition to step (a):
(b) Treatment of the building blocks within the multifunction device.

The treatment according to (b) preferably takes place after step (0) and/or before and/or after step (2).

According to the invention, at least one of steps (1), (2), (3), (4), (a) or (b), preferably all steps, are conducted in a fully or partially automated manner.

The process according to the invention is further controlled/regulated by at least one data processing device.

A multifunction device for running the above-mentioned process may comprise the following means:
(1) Means for receiving of at least two building blocks,
(2) means for the feeding and/or removal of media, and
(3) means for the identification of the position of the multifunction device.

The multifunction device is *inter alia* characterized in that the means for the identification of the position bear a code, which is resistant/inert under reaction conditions.

The means for receiving of the at least two building blocks are preferably sections which may be suitable openings of any random geometrical shape. By "sections" in the scope of the present invention, defined locations within the multifunction device shall be understood, as for example hollow spaces, which can always be re-identified due to their coordinates. These locations or, respectively, sections are suitable for receiving of the building blocks and they are also preferred to be provided as reaction chamber.

The means for the feeding and/or removal of preferably fluid media are realized in a preferred embodiment by pipe-like openings, as for example pipe and capillary systems or bore holes, by porous layers or, in a particularly preferred embodiment, by suitable membranes. Preferably, those membranes are permeable or semi-permeable seals or areas of seals, which in principle can be provided with a sealing or blocking device for opening and closing the membrane.

The means used for the identification of the position of the multifunction device are preferably codes.

As codes, all codes known to the person skilled in the art using alpha numerical, numerical or alphabetic encoding, are envisaged. It is the objective of the particular code, to link individual information or single information, respectively, (e.g. information on particular building blocks of the material library, information concerning the production history of individual building blocks, information derived from analysis data, i.e., information which is derived from properties of first and/or second order and from the testing for performance characteristics) and so-called collective information (i.e., for example information about the entire material library: history thereof, date of manufacture). It is an objective to render the codes as efficient as possible thereby providing a logical flux of data which is devoid of errors.

It is also important in the present context that the encoding is achieved by means of a code system which ensures the full extent of readability under the particular reaction conditions used. In a preferred embodiment, optical bar code systems are employed.

The term "material library" as used in the scope of the present invention specifies an array comprising at least two, preferably up to 10 further preferred up to 100, in particular up to 1000 and further preferred up to 100,000 substances or chemical compounds, respectively, mixtures of chemical compounds, formulations, which in the scope of the present invention are denominated as "building blocks". These building blocks in turn are present in different, separate sections of a multifunction device. A number of building blocks, which is larger than 100,000 is not excluded and therefore is also envisioned.

The term "building block" describes a single defined unit which is located in the respective separate sections of the material library in the multifunction device and which may be composed of one or more components or materials, respectively.

The manufacture of the building blocks may be accomplished inside the multifunction device, as well as outside of the latter, with a partial or pre-production outside of the multifunction device in combination with the final manufacture of the building blocks being conducted inside the multifunction device, in particular with regard to the aspect that a building block may also be composed of several components.

Such building blocks in the scope of the present invention are preferably non-gaseous substances, as for example solids, fluids, sols, gels, wax-like substances or mixtures of substances, dispersions, emulsions, suspensions, with solids being particularly preferred. The range of the substances used according to the invention comprises molecular and non-molecular chemical compounds and formulations, respectively, or mixtures and materials, respectively, in which the term "non-molecular" defines substances which may be continuously varied or altered, respectively, and is in contrast to "molecular" substances, where the structural design of which may only be altered by means of a variation of discrete states, i.e., for example the variation of a substitution pattern.

The composition of the building blocks comprises both, the stoichiometric composition as well as the composition of the materials to be tested with regard to the substances and chemical elements, which may differ depending on the material used. Hence, using the present invention, it is possible to manufacture or test, respectively, material libraries, which are composed of materials which are identical concerning their chemical element-composition, but which, however, differ in the stoichiometric composition of the chemical elements forming the material; further, it is possible that the material library is composed of materials which differ from each other concerning their chemical element-composition; of course, it is also possible that the individual materials differ from each other concerning their stoichiometric and their chemical element-composition. It is further possible that the material library is composed of building blocks which are identical concerning their chemical element-composition and their stoichiometric composition but, however, differ from each other concerning their physical or chemical or physical/chemical properties as a consequence of the applied process step. The term "chemical element" as used herein refers to the elements of the periodic system of elements. By the term "substance" in the present context materials, components or precursor components, which lead to a certain material, shall be understood.

By means of the process according to the invention building blocks, such as for example heterogeneous catalysts or heterogenized catalysts, luminophores, thermo-electric, piezo-electric, semi-conducting, electro-optical, super-conducting or magnetic substances or mixtures of two or more of these substances, in particular inter-metallic compounds, oxides, mixtures of oxides, mixed oxides, ionic or covalent compounds of metals and/or non-metals, alloys of metals, ceramics, organo-metallic compounds and composite materials, dielectric materials, thermo-electric materials, magneto-resistant and magneto-optical materials, organic compounds, enzymes and mixtures thereof, pharmaceutical substances, substances for animal food and animal food supplements, substances for food and food supplements, and cosmetics and mixtures of two or more oxides may be varied in any manner. It is also possible to test all possible catalyst variants by employing a different suitable element-composition a multiplicity of yet mainly similar catalysts, which, however, differ from each other with respect to at least one element.

The building blocks of the material library can be equal to each other or they may be different, with the latter being preferred.

Preferably, the building blocks of the material library are present as individual bodies, as for example spheres, monoliths, cylindric bodies, etc..

The presence of the building blocks of the library as individual bodies is preferred in the process according to the invention, because the latter facilitates the filling of the multifunction device in step (1) (distribution: preferably physical transfer of the building blocks into the multifunction device, with the distribution comprising in a preferred embodiment also the filling) as well as the unambiguous identification of the building blocks in step (2).

The term "introduction" as it is used according to the invention, preferably embodies all the distribution processes known to the person skilled in the art which are suitable to distribute the building blocks from preferably one collecting vessel, for example a suitable container, to the particular sections of the multifunction device. The latter is preferably accomplished by manipulation, for example by placement of individual building blocks and/or simultaneous placement of several building blocks by means of suitable mechanical devices. Concerning the latter, the following shall be named in particular: Accumulating of the building blocks and distribution to the sections by using gravitational and/or electrostatic forces, accumulation of the building blocks and distribution to the sections by doctor blade (doctoring of the plane surface of the device), as well as accumulation of the building blocks and distribution to the sections by vibration of the device. As collection vessel in principle all vessels known to the person skilled in the art may be used, which are suitable for the accomodation and storage of such building blocks.

Furthermore, devices for the reception (storage and stock-keeping, respectively) of suitable amounts of building blocks may be used, as for example magazines, pallets, beakers, Schlenck flasks and flasks, which also allow for storage under defined conditions, for example storage under inert conditions. The introduction (preferably distribution) is accomplished by using a filling station which accomplishes the filling of the multifunction device, with the single building blocks of the library being distributed to the particular sections within the multifunction device. It is also envisioned to use several filling stations having a corresponding number of accomodation devices. As filling stations e.g. machine directed handling devices are envisioned, as for example robots, the process programs of which are freely programmable.

The introduction (preferably distribution) of the building blocks according to the invention is preferably achieved in a fully automated manner with the possibility of assigning an unambiguous address to each building block of the material library within the multifunction device during the latter distribution step. In a preferred embodiment, distribution processes which generate material libraries having a multiplicity of building blocks are used, with the individual building blocks being able to be identified by means of an inherent code.

By encoding in general the encrypting of information or its rendering by different means, respectively, is understood, e.g., the transformation of one quantity of denominators into another quantity of denominators.

An individual or, respectively, unambiguous encoding (i.e., one-to-one correspondence) of the particular building blocks in the context of the present invention means that a physical and/or chemical property of the building block can be determined by measurement. Such properties of the building blocks may be for example: Shape, density, porosity, properties of the surface, plasticity, elasticity, chemical properties, composition, concentration, optical and electronic properties, size and morphology.

Thereby the physical and/or chemical property chosen to be used for the encoding is such that it is different from the performance characteristics to be determined and inert concerning those determination conditions.

Such an encoding should be chemically inert to the largest possible extent and should not be harmed by the preceding process steps. The latter can for example be accomplished by addition of one or more elements which are inert with respect to the testing reaction in different quantities. By probing for this particular element an unambiguous identification of the material will be possible. Concerning this so-called "chemical encoding" it is important that the component or components, respectively, should not be volatile. Therefore, for example halogens, arsen, selenium, tellurium, cadmium, lead or mercury are only suitable to a restricted extent.

Further processes for the addition of the encoding are for example: Lithographic processes, etching processes, LIGA-processes, laser ablation processes, drilling processes, milling processes, erosion processes, lapping processes, ECM-processes, printing processes, as for example screen printing, engraving, etc., with the prerequisite that the encoding has to be resistant and inert under reaction conditions (e.g., high temperature and reactive gas) in order to ensure the "readability" of the encoding during the identification procedure. Depending on the encoding process or encoding system, respectively, different identification processes may be employed. As examples, the following shall be mentioned herein: Identification by physical processes, as for example by optical identification systems or identification via chemical processes, as for example the determination of the pH value. When combining different methods of encoding, also combinations of different identification processes may be applied.

The processes concerning the building blocks described herein, may also be used for the fixation or introduction, respectively, of the code, which preferably serves as a means for the identification or identification of the position of the multifunction device, to the multifunction device itself.

Particularly suitable and preferred is encoding by means of radioactivity or gamma radiation in which the corresponding elements are brought into the material system at each building block. By detecting the radiation using a suitable detector, the particular building blocks and/or groups of building blocks of a material library can be identified. It is further preferred to accomplish encoding by means of nano materials, as for example chemically inert cluster compounds, for example oxides of rare earth elements, TiO₂, ZrO₂, which e.g. exhibit a fluorescence or phosphorescence activity.

In step (2), the building blocks of the library are subsequently identified according to their inherent encoding and the unambiguous location of the building block within the multifunction device is preferably stored as data which are stored in a data processing device. Therefore, an unambiguous assignment of the building blocks within the multifunction device is guaranteed. The identification of the particular building blocks and the assignment thereof in the multifunction device is preferably achieved by means of an identification station.

The identification of the building block may be achieved by means of one or several analysis methods, selected from the group comprising XRF, XRD, IR, Raman spectroscopy, RFA, UV/VIS spectroscopy, detection of high energy radiation, NMR spectroscopy, ESR spectroscopy, Mösbauer spectroscopy, SIMS and optical methods, mass spectrometric methods, as for example GDMS (glow discharge mass spectroscopy) and MS in combination with laser ablation methods. In a preferred embodiment, identification is achieved by XRF and/or measurement of optical properties, such as for example fluorescence and phosphorescence.

Of special interest are in particular also such encoding methods, in which the analysis does not result in a discrete quantity which can be varied continuously, but such methods, in which discrete quantities in defined discrete quantized units are obtained which result in an alpha numerical or alphabetic code by simply putting together the individual information.

A code as mentioned above which can be rendered by a certain quantity which may be varied continuously, may for example be characterized by its content concerning a particular element, which subsequently is determined by XRF. Another example is the content concerning a certain luminophore or other components which are optically detectable and which can also be detected as a direct function of their concentration by means of physical measuring methods.

A problem occurring with this kind of encoding is the susceptibility to mistakes concerning the concentration. It is true that in case of small libraries, sufficient preciseness may be achieved by choosing relatively large steps in the concentration encoding, however, the preciseness inherent in the system is not raised and delivers a latent uncertainty on analysis. The latter can be improved by using mixtures of several components, as in this case a relative concentration embodies the relevant quantity, rather than an absolute concentration. The determination of such relative concentrations is substantially less susceptible to mistakes and less sensitive to the latter, respectively, in comparison to an absolute determination method. In this case, there is an interesting possibility concerning the encoding method: By definition of certain fixed concentration levels, numbers or general codes may be defined, e.g., an entire information chain based on a code may be built-up. In this case, e.g. a certain relation of encoding elements may represent a certain numerical value, which corresponds to a certain operational step in the manufacturing chain.

Example: All carrier bodies obtain an encoding on the basis of Si/Al in relation 1/10 for the treatment step using a solution containing ammonia. Subsequently, the carrier bodies are divided into two subsets and dried at a temperature of 100 and 200 °C. For the drying conducted at 100 °C, an encoding of Ti/Zr with a ratio of 5/5 and for drying at 200 °C a ratio of 3/7 is applied. Due to this encoding, an unambiguous tracing of the treatment steps may be accomplished by analyzing the respective element ratios on the carrier bodies.

The identification of individual building blocks according to the invention is accomplished by a process characterized in that the concentration or the concentration ratio of one or several isotopes of one or several elements is determined.

Hence, the kind of encoding described above can even be refined, if an isotope ratio of the encoding elements is used as a basis for the code. In this case, even mistakes in the encoding process can be compensated for, which mistakes may occur by comparatively bad adhesion of one of several codes on a carrier body or building block of a material library. In the latter process, certain isotope ratios of the encoding elements are assigned to particular meanings, such as numerical values or characters. In such a kind of encoding, primarily enriched isotopes are used.

For example, the following assignment may be used: All carrier bodies obtain an encoding with isotopes 1 and 2 of element A in the ratio of 1/10 for the treatment with solution containing ammonia. Subsequently, the carrier bodies are divided into two subsets and are dried at 100 and 200 °C. Concerning the drying at 100 °C, an encoding with isotope 3 of element A is accomplished and for the drying process at 200 °C, the latter is applied with isotope 1' and 2' of element B. Due to the encoding, an unambiguous tracing of the treatment steps may be achieved by analysis of the respective isotope ratios of the elements on the carrier bodies.

Suitable techniques which can be used for the analysis of isotope ratios are *inter alia* mass spectrometric methods, in particular such, in which by means of addition of energy a partial evaporation or ablation of the carrier bodies is accomplished (laser ablation, bombardment with high energy ions, and others).

The most efficient kind of encoding is the assignment of isotope ratios to certain numerical codes which subsequently can be put together to form combinations of numbers by means of mathematical operations in a very efficient manner thereby allowing for a documentation of the history of the sample (history of the building block).

The expression "carrier body" in principle comprises all three dimensional facilities and bodies having a rigid or semi-rigid surface and which may be flat or may contain holes, pores or bores or channels. The carrier body must be suitable to accomodate the substances. Concerning the outer shape of the carrier bodies, there are no restrictions as long as the latter is a three-dimensional device or a three-dimensional body, respectively. Hence, the carrier body may adopt the shape of a sphere or hollow sphere, of an ellipsoid body, a cuboid, of a cube, of a cylinder, a prism or a tetraeder. The term "carrier body" therefore also encompasses three-dimensional facilities for the accomodation of fluids.

A "subset" is an accumulation of carrier bodies spatially not separate from other subsets, obtained by division of a quantity and/or partial quantity of carrier bodies, with the number of carrier bodies in the subset being always smaller than the number of carrier bodies in the quantity.

A "partial quantity" is an accumulation of carrier bodies being spatially separated from other partial quantities and being obtained by dividing a quantity of carrier bodies, with the number of carrier bodies in the partial quantity being always smaller than the number of carrier bodies in the quantity.

By means of the above mentioned encoding methods, each building block of the material library may be encoded individually, with the encoding being resistant/inert under the given reaction conditions.

An encoded material library is a library which has been provided with codes. The individual building blocks of the library are provided with such kinds of codes (optionally, also the device containing the library or the multifunction device, respectively). The encoding of the material library (so-called encoded material library) allows for the assignment of information to the individual building blocks of the library and to the entire library, e.g. of analyses of properties of first and second order or performance tests. The encoding allows for an identification at any time. In comparison to commonly used methods (tagging of vessels, positioning on arrays, etc.), the latter offers great advantages.

Such an "encoded material library" renders information about the identity and the treatment steps to which an building block of the material library has been exposed. Such a material library and the individual building blocks thereof may be present "out of order", i.e., within a storage vessel (without a known discrete location), or in a multifunction device at a known position. The advantages of such an encoded material library are obvious: The information once encoded on the individual building blocks is not lost and can be activated on demand, which prevents confusions and renders other means of information storage concerning the identity of the building blocks of the material library superfluous. The latter process is particularly useful in the encoding achieved by manufacturing processes, in which the manufacturing information cannot be recorded or will not be recorded as a function of position. By means of the individual code, an unambiguous identification of the individual building blocks is rendered possible.

The information obtained by the identification of the building blocks in step (2) is preferably stored in the at least one data processing device on at least one data carrier.

The testing of the building blocks for at least one performance characteristics within the analysis, which analysis preferably is conducted after the identification, preferably is preceded by an analysis station for the measurement of properties of first and second order.

"Performance characteristics" are measurable properties, preferably such of first and second order and catalytic properties, belonging to the building blocks of the material library which can be assayed using suitable sensors in an automated testing process (analysis).

By first order properties in the scope of the present invention those properties shall be understood which are obtained by using physical characterization methods, as for example x-ray diffraction, LEED structure determination, EDX, x-ray fluorescence analysis, x-ray photoelectron spectroscopy, Auger spectroscopy. Examples for first order properties are: Atomic distance, element-composition, etc..

By second order properties those properties are understood which are accessible by using physico-chemical characterization methods, as for example nitrogen adsorption [surface dimensions (BET)]; TPD (strength of binding of adsorbates to surfaces or selective chemisorption - i.e., dimensions of the surfaces of active centers).

The term "property" relates to physical, chemical or physical chemical states of the particular materials in the material library; as examples are hereby mentioned: Oxidation state, degree of crystallinity, etc..

The testing of the building blocks for at least one performance characteristics is conducted during analysis, preferably by a separate analysis station. Analysis stations may also be concentrated. It is also envisaged that for each property to be tested a separate analysis facility is applied.

As it is possible to contact the building blocks with fluids and/or energy rich radiation as for example magnetic fields, light, UV-VIS, XRD, microwaves etc., a multiplicity of performance characteristics may be tested, which allow to judge, whether the building blocks are suitable catalysts, thermoelectric materials, superconductors, magneto-resistant materials, etc..

By "analysis" according to the invention, all such analysis techniques for the testing of materials within a material library shall be understood which serve the determination of the properties of the latter.

As examples, the following shall be mentioned herein: Infrared thermography, infrared thermography in combination with mass spectroscopy, mass spectroscopy, gas chromatography, liquid chromatography, high pressure liquid chromatography (HPLC), micro GC, dispersive FTIR-Spectroscopy, microwave spectroscopy, Raman spectroscopy, NIR, UV, UV-VIS, NMR, ESR, GC-MS, infrared thermography/Raman spectroscopy, infrared thermography/dispersive FTIR spectroscopy, color detection using a chemical indicator/MS, color detection using a chemical indicator/GCMS, color detection using a chemical indicator/dispersive FTIR spectroscopy, photo acoustic analysis, electronic or electrochemical sensors, as well as thermographic NMR and ESR methods.

Particularly preferred is mass spectrometry and measuring methods coupled therewith, as well as thermographic NMR and ESR methods, microwave spectroscopy methods, optionally using specific probe molecules.

Further preferred is infrared thermography having a correction for emissivity, with the correction being accomplished by calculating the difference of a first picture which is taken in advance without chemical turnover, and a second picture in the presence of a chemical turnover, the latter of which is easy to realize using an infrared camera (WO 99/34206). Hereby, the temperature development of the individual building blocks is to be taken from the IR-picture recorded, whereby digital image processing is preferred. If a low amount of building blocks is present, optionally each single part may be assigned to a temperature sensor, for example a pyrometric element or a thermo element.

The analysis of the building blocks for performance characteristics may be accomplished in parallel or sequentially.

The process according to the invention further contains a archiving step in which the building blocks present in the at least one multifunction device are preferably archived in the latter device by using the latter device.

Furthermore, the process preferably comprises the step of sealing the at least one multifunction device. In the latter process step, the multifunction device may be sealed by means of all processes known to the person skilled in the art, preferably the latter is sealed by bonding, gluing or welding (cold diffusion). After the sealing of the multifunction device, the building blocks of the material library may only be contacted via e.g. membranes using preferably fluids or energy-rich radiation. For example, a magnetic sealing of the multifunction device or a sealing by the use of adhesion forces between the highly planar, e.g. polished or lapped surfaces, is also envisioned. In particular, methods of sealing are taken into consideration which allow for a subsequent, preferably automated, opening of the multifunction device.

By e.g. choosing an appropriate geometry of the multifunction device, it is for example ensured that preferably the automatic storage of devices including the building blocks contained therein is possible in appropriate storage facilities by means of electronically controlled handling devices, as for example robots, the processes of which are freely programmable.

Furthermore, after an optional "sealing step", the multifunction device may be stored in suitable boxes, which in principle resemble for example conventional CD-drives, CD, DAT or minidisk envelopes, to ensure e.g. a protection of the building blocks against environmental influences (housing). Such an outer protective medium, which is present e.g. as a suitable box, preferably surrounds the sections of the multifunction device and is preferably removed upon reaction, or, respectively, the latter is removed in part. Such a partial removal e.g. can be ensured by seals, as for examples lids, which upon reaction are preferably opened or revolved. Building blocks archived in such manner can be subjected to a further spectrum of conditions upon archiving, such as e.g. a treatment by fluid and/or contact with radiation, a treatment rendering them inert, aging under reactive gas and/or hydro-thermal conditions or a temperature treatment.

A further, preferably optional, step of the process according to the invention is the treatment of the building blocks in the multifunction device. Such a treatment of building blocks can e.g. be accomplished before (conditioning) and/or also after (aftertreatment) and/or during the analysis step or the identification step, respectively, or the archiving step, respectively.

Such a treatment of the building blocks can e.g. be accomplished by feeding of fluids through membranes which are preferably provided at the multifunction device.

By the term "treatment" preferably a physical or chemical or a physical and chemical treatment of at least a part of the building blocks, materials or substances used according to the invention shall be understood. A quantity of building blocks may also be treated such that the above-mentioned treatments are not applied homogeneously to all building blocks. It is for example possible that a part of the quantity of building blocks is subjected to chemical treatment, whereas another part of the quantity of building blocks is subjected to a physical treatment, without one part being influenced by the other kind of treatment. It is further possible to impose a gradient of the particular treatment over the quantity of building blocks, for example a thermal treatment in a tube furnace at the end of which a temperature of e.g. 500°C and at the other end of which a temperature of e.g. 1000°C is present, with the temperature changing continuously or discontinuously from one end to the other end. Examples for physical treatments are treatments using temperature, pressure or light, examples for chemical treatments are contacting with reactive gases, as for example hydrogen, ammonia, hydrochloric acid, reaction solutions as e.g. precipitation agents, mineralizing agents, bonding agents, fixing agents and hydrophobizing agents, examples for physico-chemical treatments are contacting with e.g. vapor or treatment with reactive gases and simultaneous irradiation with light. Furthermore, the building blocks may also be subjected to a treatment using energy-rich radiation, with the following being mentioned as examples: Magnetic field, light, UV-VIS, XRD (X-Ray Diffraction) and microwaves. Further, a treatment and/or analysis under the respective conditions is also possible during archiving.

In the process according to the invention, the multifunction device is used several times in steps (3), (4) and/or (b) using the building blocks, with upon each new action one being able to access information that has already been stored. The choice of the at least one multifunction device for a repeated application is preferably accomplished in an automated manner by the at least one data processing device.

Hence, by means of the process according to the invention, a archiving of the at least one multifunction device and the library building blocks contained therein becomes possible and a repeated application of the library in the at least one multifunction device, preferably in steps (3), (4) and/or (b) can easily be accomplished, as information on e.g. the unambiguous identity and position of building blocks within the at least one multifunction device preferably is archieved on at least one data carrier of a data processing device.

The data processing within the data processing device provides that each building block of the material library besides a sample ID is assigned the entire information derived from the preferably externally conducted automated manufacturing process (synthesis), identification, analysis, archiving, as well as treatments, if applicable, which may e.g. be accomplished by employing a database. For purposes of tracing back, the information preferably is completed by specifying system time, system location and date, which embodies a so-called time stamp.

The unambiguous assignment of the building blocks to certain sections of a multifunction device is preferably accomplished by a reading unit connected to the multifunction device, which for example is present as a bar code reading device.

Furthermore, the connection of the steps of the process according to the invention, which are preferably conducted fully automatically, to a common software environment provides data security as well as integrity of data.

The process according to the invention further comprises preferably, a computer program having program code means for conducting the processes (process steps) and/or for the control / regulation of the at least one multifunction device, as well as at least one data carrier with computer program.

For conducting the process according to the invention, a number of technical facilities, as for example those which are mentioned hereinbelow, are necessary.
• At least one multifunction device characterized by means for receiving (sections) of at least two building blocks of the material library, with a suitable structure being provided for receiving which preferably allows for the rinsing of the building block with fluid, as well as preferably membranes, which pref erably serve as openings or outlets for fluids or as windows, respectively, for high energy radiation, and by means for the feeding and/or removal of media, as for example a system of channels, which allows for the feeding and removal of for example fluids, as well as by means for the identification of the position of the multifunction device.
• At least one filling station which conducts the distribution of the individual building blocks of the library within the at least one multifunction device.
• At least one identification station for the identification of the particular building blocks and the assignment thereof within the at least one multifunction device, with the identification being e.g. accomplished by XRF or by the measurement of optical properties (fluorescence, phosphorescence).
• At least one identification device for the identification of the position of the multifunction device.
• At least one analysis station for the measurement of first or second order properties.
• At least one analysis station for checking the "performance characteristics".
• At least one archiving station for the archiving of the building blocks.
• Optionally, at least one treatment station for the treatment of the building blocks.
• Optionally, at least one manufacturing station for manufacturing the building blocks.
• Computers for running the process in a fully automated manner.

Preferred are extremely powerful computers on the basis of RISC processors.

The stations mentioned herein can of course be combined in a manner that for example a treatment of the building blocks during archiving may be accomplished.

A particular array of the individual stations within the process according to the invention is not obligatory. The order of the steps to be conducted can also be chosen arbitrarily. It is for example envisioned that after the distribution and identification step, and immediate archiving takes place, with such kinds of material libraries being preferably subjected to analysis later on.

For an optimized running of the particular steps, a linear or circular array of the individual stations is preferred. The stations thus placed in a manufacturing line or manufacturing cell are preferably designed in a modular manner so that they may be exchanged on demand as a kit system, or may be combined to new kinds of arrays. Also, parallel arrays, for example of two or more lines of stations and/or circular arrays of stations are envisioned, in particular with respect to the use of automated handling devices which, being controlled from a central device, are able, for example by means of a process guidance system, to transfer multifunction devices from one line to stations belonging to other lines having free capacities, if the stations of the former line are suffering from a too high workload.

Hence, to ensure a flexible and centralized control and fully automatic use of stations for the multifunction devices, it is necessary for each multifunction device to be identified. Such an identification may be ensured by an identification means tagged to the multifunction device. As identification means for example codes as bar codes are envisioned, which preferably are etched into the surface of the multifunction device, as well as so-called "radio tags" (radio transmitters based on the principle of radio frequency encoding), optical codes (e.g. holographic codes), as well as magnetic codes, which are fixed to the multifunction device.

To ensure that the orientation of the multifunction device and, hence, the corresponding position of the building blocks in the particular sections remains defined from station to station, the multifunction device may e.g. be provided with particular geometric symbols or positioning devices.

Therefore, the process according to the invention allows for the fully automatic and integrated identification, analysis and archiving of material libraries. The problem of integrated identification, analysis and archiving is solved in the process according to the invention by means of a multifunction device, in which a multiplicity of building blocks can be accommodated. The multifunction device allows for an unambiguous assignment of the building blocks by positional addressability. By the technology belonging to the multifunctional device, the building blocks can be examined using a multiplicity of methods thereby testing them for useful properties. The technology of the multifunction device according to the invention allows for an economical and cheap manufacture which makes the storage of the building blocks in the same vessel also financially attractive. Technically, the storage of material samples in the multifunction device also offers advantages, as the use of membrane technology provides a shield against environmental influences. By means of an integrated over-all system, there are also enormous logistic advantages in comparison to the state of the art.

The preferably external manufacture of the building blocks can also be accomplished within the multifunction device.

The present invention is described in detail below with reference to one embodiment and with reference to the accompanying drawings. The following is shown by the figures:
- Fig. 1: A schematic representation of the distribution of building blocks within the multifunction device;
- Fig. 2: a schematic representation of the identification of building blocks in a material library;
- Fig. 3: a schematic representation of the sealing of the multifunction device;
- Fig. 4: a schematic representation of modules for the treatment of the building blocks contained in the multifunction device;
- Fig. 5: a schematic representation of a treatment of the building blocks within the multifunction device;
- Fig.6: a schematic representation of a first array for the analysis of building blocks for performance characteristics.
- Fig. 7: a schematic representation of a second array for the analysis of building blocks for performance characteristics;
- Fig. 8: a schematic representation of a third array for the analysis of the building blocks for performance characteristics;
- Fig. 9: a schematic representation of the archiving of the multifunction devices;
- Fig. 10: a schematic representation of a circular array of stations;
- Fig. 11: a schematic representation of a linear array of stations.

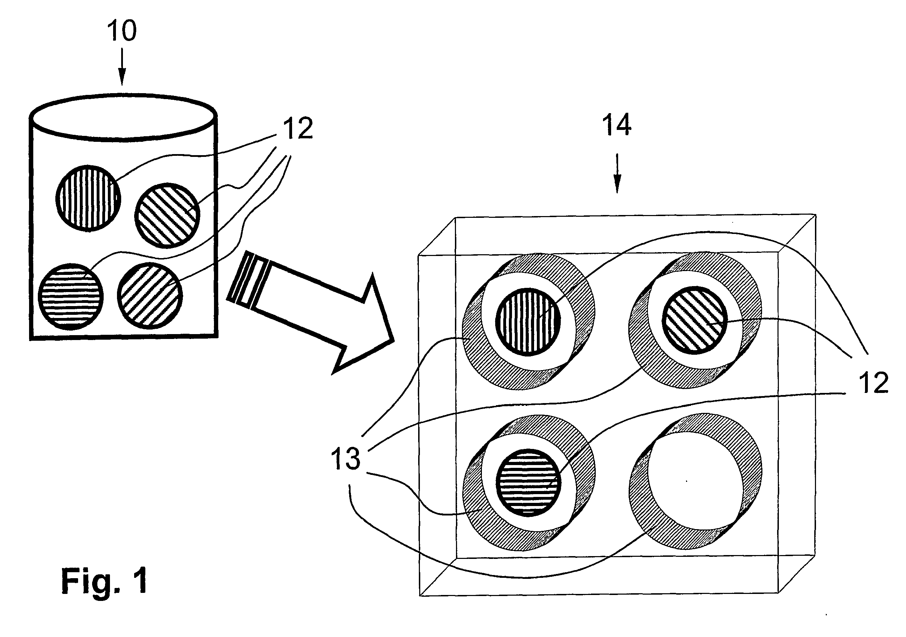

Figure 1 shows the distribution of the building blocks 12 of a material library from a collecting vessel 10 (container) to sections 13 of the multifunction device 14. The latter distribution preferably is accomplished fully automatic by means of suitable handling devices.

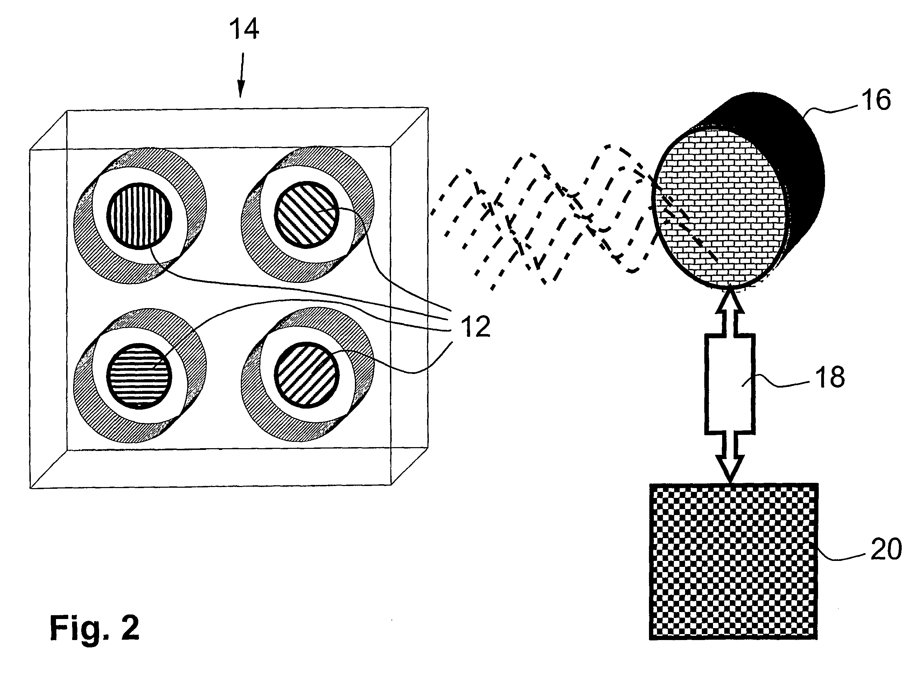

As shown in Figure 2, building blocks 12 are identified within the multifunction device 14 by using a detector 16 which optionally is mobile. The identification information are transferred to a data processing device 20 in which they are stored on a data carrier, by using suitable communication means 18, as for example wires, plugs and corresponding ports.

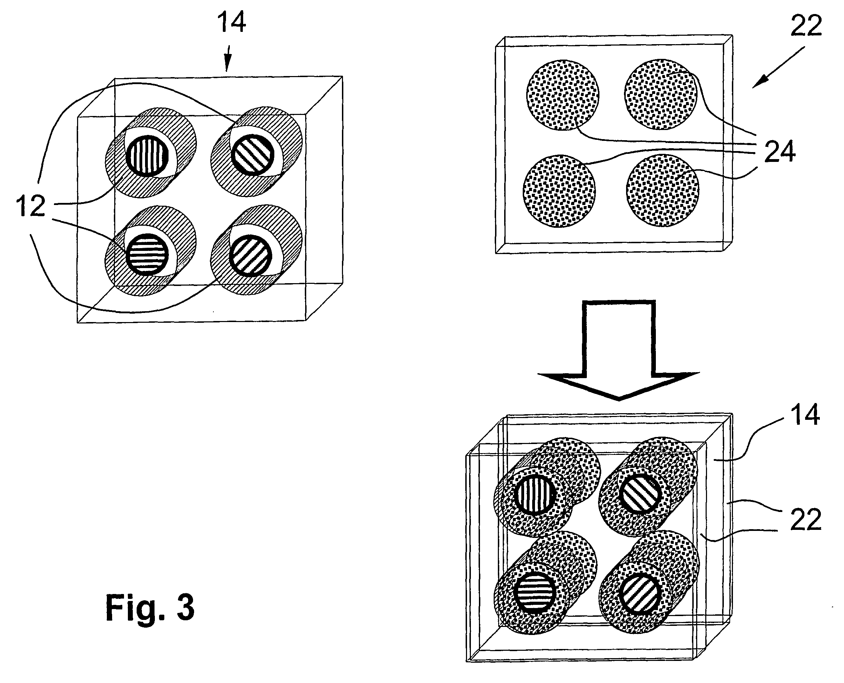

Figure 3 shows the possibility of sealing the multifunction device 14. Preferably, the multifunction device 14 is provided with seals 22 on both sides, which contain membranes 24. Hence, a multifunction device 14 is obtained which has adopted seals 22.

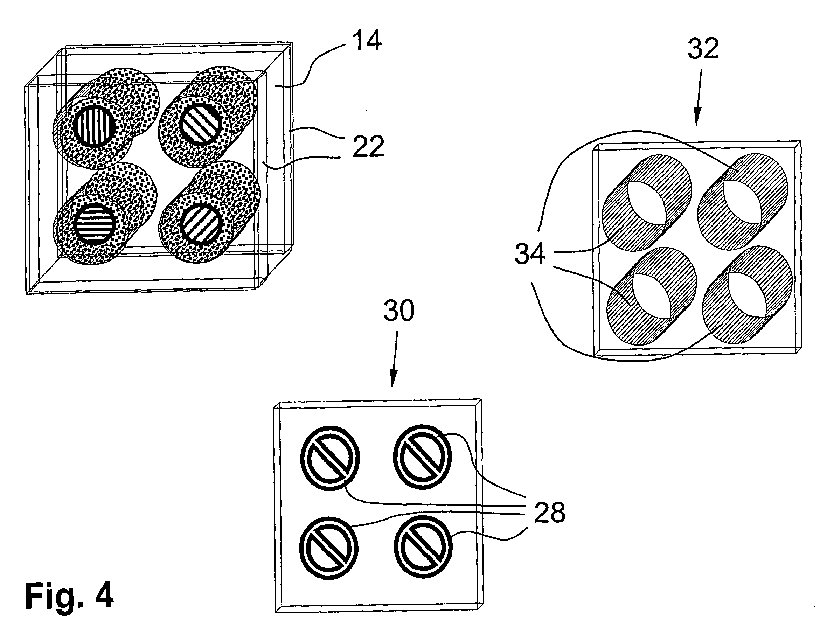

By using suitable modules, building blocks 12 in the multifunction device 14 having adopted seals 22 can be subjected to a treatment. Figure 4 shows on the one hand a module 30 for the thermal treatment of the multifunction device 14 having adopted seals 22 which has thermal conductors 28 for membranes 24 and on the other hand a module 32 for contacting fluid of the multifunction device 14 having adopted seals 22 which has fluid adapter 34 for membranes 24.

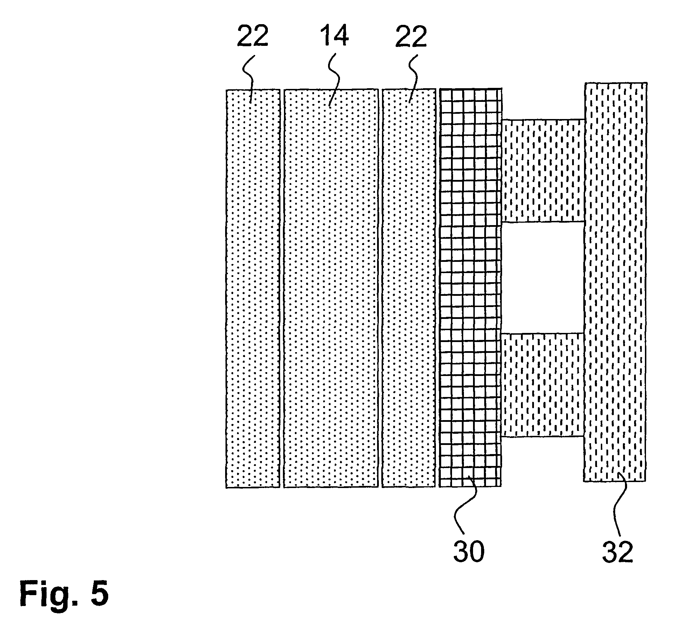

Figure 5 shows a possible array of modules 30, 32 in connection with the multifunction device 14 having adopted seals 22, for the treatment of building blocks 12 in the multifunction device 14 having adopted seals 22.

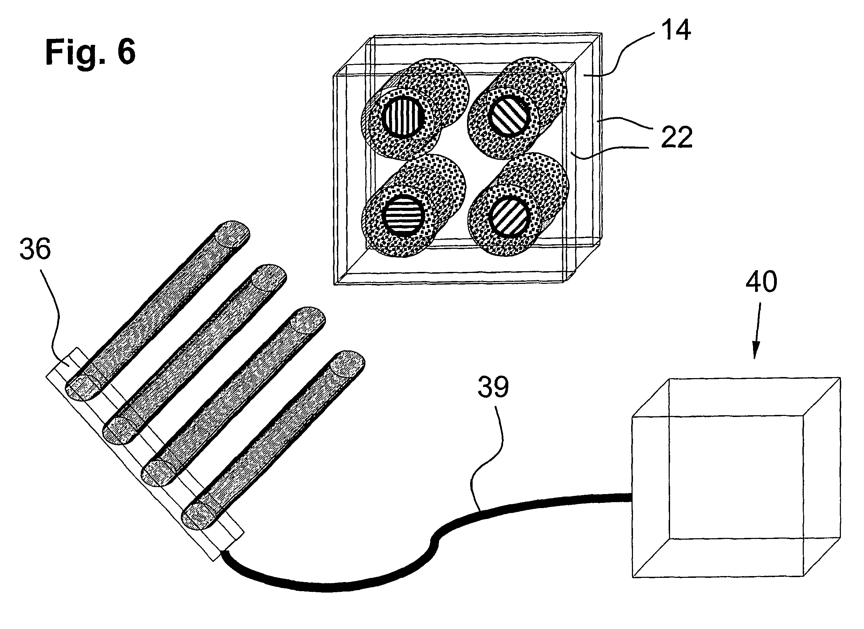

Analysis of building blocks 12 in the multifunction device 14 having adopted seals 22 for performance characteristics can, as shown in Figure 6, be accomplished by using a mobile array made of probes 36 for the determination of performance characteristics and a corresponding analysis facility 40, which are linked by suitable linking elements 39.

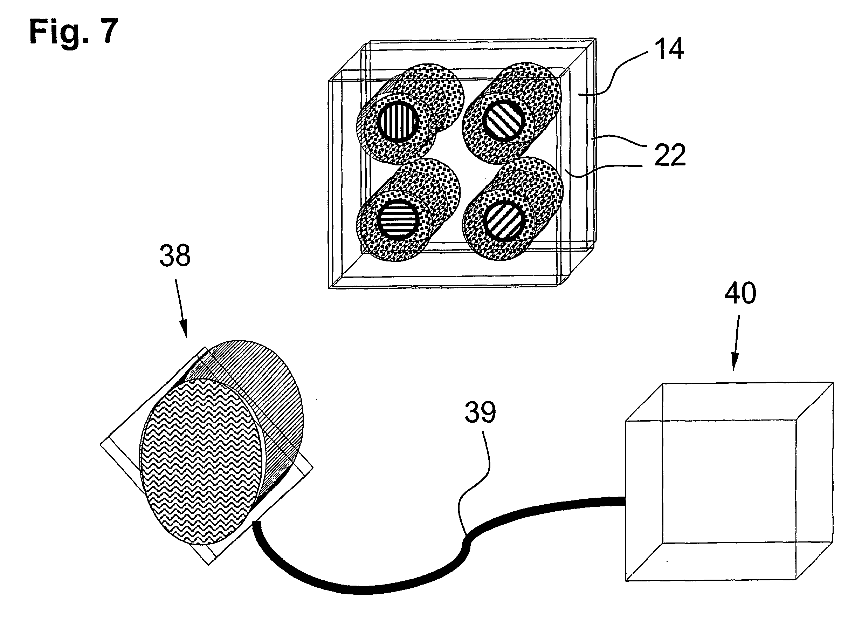

Figure 7 shows a similar array with the analysis of building blocks 12 for performance characteristics in the multifunction device 14 having adopted seals 22 being accomplished by an integral probe 38. Also, in this case, the integral probe 38 is connected to an analysis facility 40 via connecting elements 39.

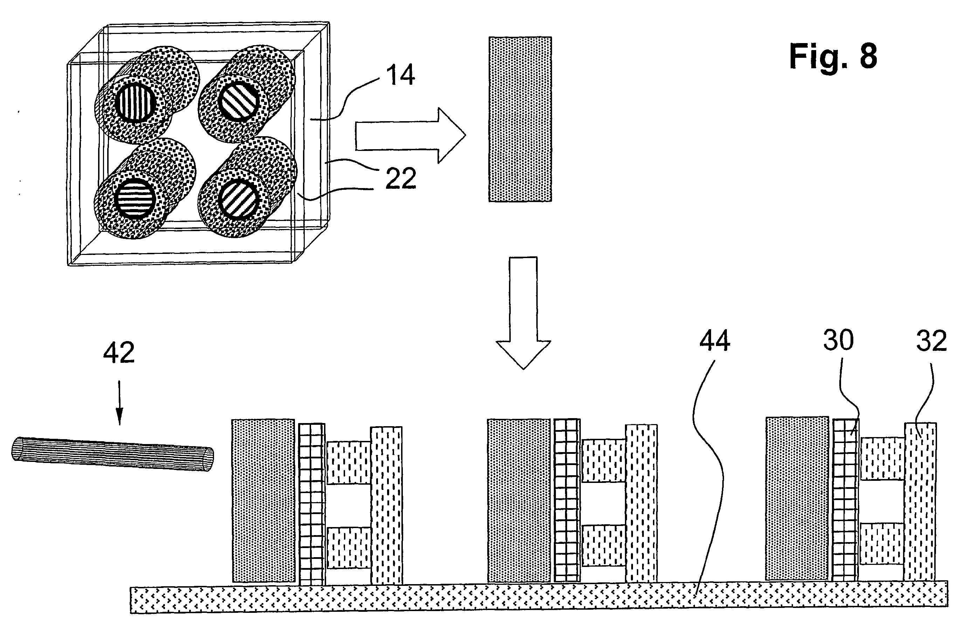

In Figure 8, a measuring station 44 is shown which serves the analysis of building blocks 12 in the multifunction device 14 having adopted seals 22 for performance characteristics. Arrays as shown in Figure 5 are positioned on the measuring station 44 such that a sensor 42 can analyze several multifunction devices 14 having adapted seals 22 for performance characteristics.

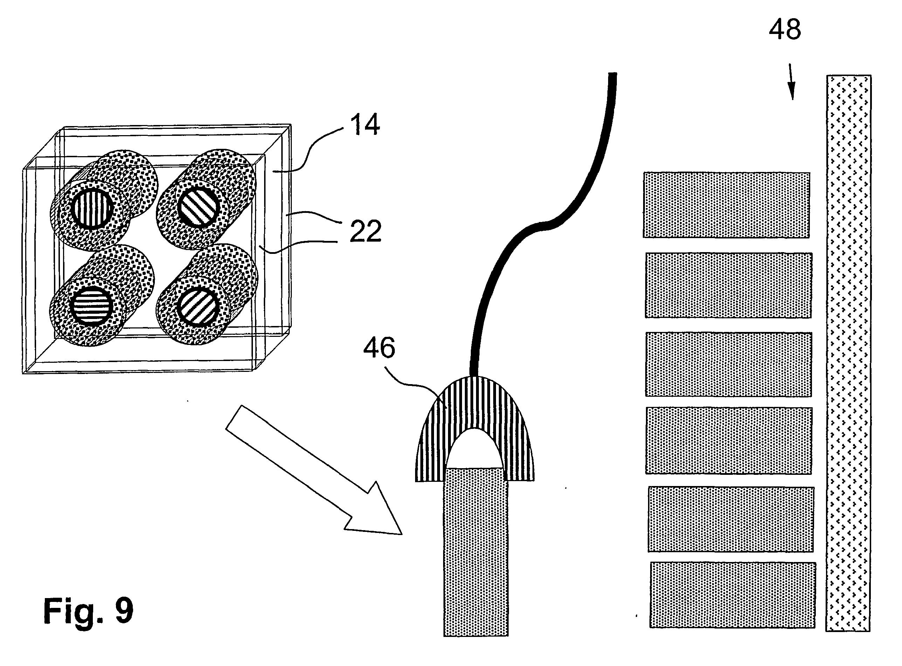

Figure 9 shows a possible type of archiving of the multifunction device 14 having adopted seals 22 in an archiving facility 48. During the latter step, the multifunction devices 14 having adopted seals 22 are transferred to an archiving facility 48 in a fully automated manner using a pickup device 46 being e.g. part of a handling device, with the position of a multifunction device having adopted seals 22 being stored in the data processing device 20.

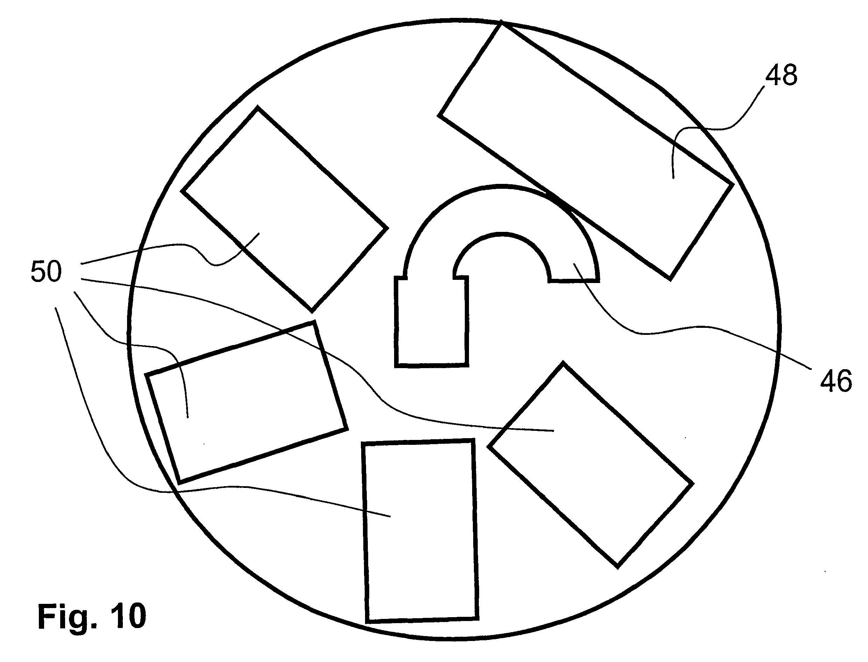

In Figure 10, one possible circular array of stations 50 is shown which stations are suitable for receiving of preferably one multifunction device 14. For example, pickup device 46 which can be driven in all three directions (x, y, z) or, respectively, moved in three dimensions and/or preferably be turned around 360°, which pickup device can e.g. be part of a SKARA robot, KUKA robot or of a KUKA linear unit, is preferably used as transport means (transfer of a multifunction device 14 between stations 50). The transport of multifunction devices 14 between the stations 50, however, may also be achieved by other suitable devices, as for example transport systems (curved transport systems, circular transport systems) having a corresponding station frequency. The pickup device 46 can e.g. exert additional functions by transferring multifunction devices 14, if e.g. at particular stations 50 "traffic jams" occur, to other stations 50, or by transferring multifunction devices 14 from stations 50 into the archiving facility 48 or, respectively, from the archiving facility 48 back to stations 50.

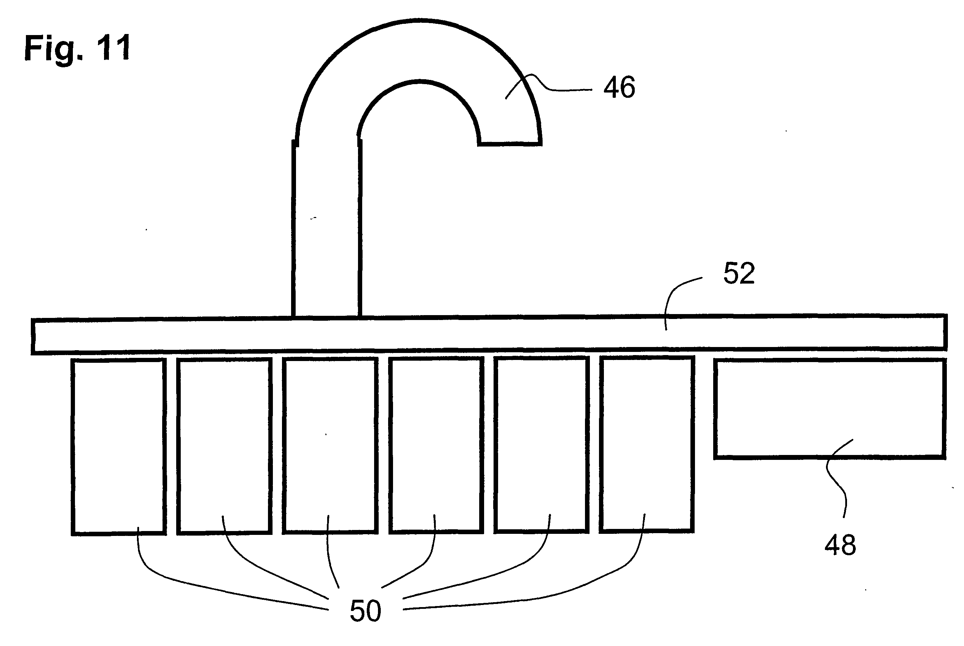

Figure 11 shows a further possible array of stations 50, which can be also linear, as described. In particular, for such linear arrays, besides handling systems having pickup devices 46, which can be installed on rails in linear arrays. Also in principle all transport systems known to the person skilled in the art may be used, as for example continuous mechanical handling equipment, stream conveyors, floor conveyors, etc..

Preferably, the process according to the invention is conducted using the aid of a workstation, preferably with all stations 50, multifunction devices 14, handling devices, other facilities, as for example connecting elements and transport systems, as well as data processing devices 20 and process control/process regulation or, respectively, process guidance systems and material flow systems forming the constituents of such a workstation with preferably fully automated workflow, and possibly being controlled or regulated, respectively, by the latter.

By workflow in the scope of the present invention preferably a working process, working course or working flow, respectively, shall be understood, with the particular steps of such a workflow preferably being determined by the process steps of the present invention. Additional process steps are also possible.

An important constituent of such a fully automated workflow is the possibility of unambiguously identifying the particular multifunction devices 14 with the material libraries contained therein. The identification systems in this case serve the recognition of a multifunction device on the basis of the information, preferably encoded information, which was assigned to the latter. The latter may be encrypted mechanically, as for example by trip cams, magnetically, by means of OCR letters, or by the bar code, which is used most frequently.

The pin code, also called bar code, which is a preferred constituent of the multifunction device 14 is composed of thick and thin lines or pixels, respectively, (e.g. points), which form an array according to a certain law (code), and the wide gaps lying therebetween. Known codes are: Code 2/5, code 2/5i, code 39, EAN code, code 129, PDF417 bar code, CODEABLOCK bar code, UPS maxi code bar code, micro-PDF417 bar code, standard 2 of 5 bar code, QR code, bar code, data matrix bar code etc..

The quality of identification *inter alia* is determined by the width and the width ratio (favorably 1:3) of the thin and thick bars or gaps, respectively, their thickness tolerance, the degree of blackening, and the sharpness of the edges of the bars.

Also envisioned are so-called programmable data carriers, as for example EEPROM or RAM for the identification of a multifunction device 14, which allows for reducing the flow of data in the transport system, with the prerequisite that the latter are also able to function under reaction conditions.

It remains to be remarked that the archiving facility 48 may contain so-called sorting systems to e.g. group individual multifunction devices 14 in the archiving facility 48 or to sort multifunction devices 14 at a person's discretion.

### List of reference numbers:

10 - Collecting vessel
12 - Building block
13 - Section
14 - Multifunction device
16 - Detector
18 - Means of communication
20 - Data processing device
22 - Seal
24 - Membrane
28 - Thermal conductor
30 - Module for thermal treatment
32 - Module for contacting fluid
34 - Fluid adapter
36 - Array of probes
38 - Integral probe
39 - Connecting element
40 - Analysis facility
42 - Sensor
44 - Measuring station
46 - Pickup device
48 - Archiving facility
50 - Station
52 - Track

## Claims

1. Process for the analysis and archiving of at least one material library, comprising at least two building blocks (12) in at least two sections (13), which comprises at least the following steps:
(1) Introduction of the at least two building blocks (12) into at least two sections (13) of at least one multifunction device (14),
(2) identification of the at least two building blocks (12) within the at least one multifunction device (14),
(3) analysis of the at least two building blocks (12) for at least one performance characteristics, and
(4) archiving of the building blocks (12) in the at least one multifunction device (14),
further comprising the following step: (b) treatment of the at least two building blocks (12) in the multifunction device (14);
wherein a building block is a three-dimensional carrier body capable of accommodating substances and furthermore is a single defined unit located in respective separate sections of the material library, and wherein the identification of the at least two building blocks is accomplished by determining the concentration or the concentration ratio of one or several isotopes or one or several chemical elements, wherein the multifunction device (14) with the at least two building blocks (12) is used several times in steps (3), (4) and/or (b), with the already stored information being used in each new application.

2. Process according to claim 1 which comprises the following further step (0):
(0) Manufacture of at least two building blocks (12).

3. Process according to claim 1 or 2 which comprises the following further step (a):
(a) Sealing of the at least one multifunction device (14).

4. Process according to one of the preceding claims wherein the identification of the at least two building blocks (12) is performed by using one or several analysis methods, chosen from the group of XRF, XRD, IR, Raman spectroscopy, RFA, UV/VIS spectroscopy, detection of energy rich radiation, NMR-, ESR-, Mösbauer spectroscopy, SIMS and optical methods, GDMS, MS in combination with laser ablation methods.

5. Process according to one of the preceding claims wherein at least one of steps (1), (2), (3), (4), (0), (a) or (b), is/are carried out in a fully or partially automated manner.

6. Process according to one of the preceding claims wherein the process is controlled/regulated by at least one data processing device (20).

7. Process according to one of the preceding claims wherein the information of the identification of the at least building blocks (12) carried out in step (2) is stored in the at least one data processing device (20) on at least one data carrier.

8. Process according to claim 1 in which the choice of the at least one multifunction device (14) for a new application is achieved automatically by the at least one data processing device (20).

## Patentansprüche

1. Verfahren zur Analyse und zum Archivieren mindestens einer Materialbibliothek, die mindestens zwei Bausteine (12) in mindestens zwei Abschnitten (13) umfasst, welches mindestens die folgenden Schritte umfasst:
(1) Einführung der mindestens zwei Bausteine (12) in mindestens zwei Abschnitte (13) mindestens einer Multifunktionsvorrichtung (14),
(2) Identifikation der mindestens zwei Bausteine (12) in der mindestens einen Multifunktionsvorrichtung (14),
(3) Analyse der mindestens zwei Bausteine (12) auf mindestens eine Leistungseigenschaft, und
(4) Archivieren der Bausteine (12) in der mindestens einen Multifunktionsvorrichtung (14),
weiter umfassend den folgenden Schritt: (b) Behandlung der mindestens zwei Bausteine (12) in der Multifunktionsvorrichtung (14);
wobei ein Baustein ein dreidimensionaler Trägerkörper ist, der in der Lage ist, Substanzen aufzunehmen, und der weiter eine einzelne definierte Einheit ist, die sich in jeweiligen getrennten Abschnitten der Materialbibliothek befindet, und wobei die Identifikation der mindestens zwei Bausteine durch Bestimmung der Konzentration oder des Konzentrationsverhältnisses eines oder mehrerer Isotope oder eines oder mehrerer chemischer Elemente bestimmt wird, wobei die Multifunktionsvorrichtung (14) mit den mindestens zwei Bausteinen (12) mehrmals in den Schritten (3), (4) und/oder (b) verwendet wird, wobei die bereits gespeicherte Information bei jeder neuen Anwendung verwendet wird.

2. Verfahren nach Anspruch 1, welches den weiteren Schritt (0) umfasst:
(0) Herstellung mindestens zweier Bausteine (12).

3. Verfahren nach Anspruch 1 oder 2, welches den folgenden weiteren Schritt (a) umfasst:
(a) Verschließen der mindestens einen Multifunktionsvorrichtung (14).

4. Verfahren nach einem der vorstehenden Ansprüche, wobei die Identifikation der mindestens zwei Bausteine (12) ausgeführt wird unter Verwendung einer oder mehrerer Analysemethoden, die ausgewählt sind aus der Gruppe XRF, XRD, IR, Raman-Spektroskopie, RFA, UV/VIS-Spektroskopie, Detektion energiereicher Strahlung, NMR-, ESR-, Mösbauer-Spektroskopie, SIMS und optische Verfahren, GDMS, MS in Kombination mit Laser-Ablationsverfahren.

5. Verfahren nach einem der vorstehenden Ansprüche, wobei mindestens einer der Schritte (1), (2), (3), (4), (0), (a) oder (b) in einer vollständig oder teilweise automatisierten Art und Weise ausgeführt wird.

6. Verfahren nach einem der vorstehenden Ansprüche, wobei das Verfahren durch mindestens eine Datenverarbeitungsvorrichtung (20) überwacht/gesteuert wird.

7. Verfahren nach einem der vorstehenden Ansprüche, wobei die Information der Identifikation der mindestens zwei Bausteine (12), welche in Schritt (2) ausgeführt wird, in der mindestens einen Datenverarbeitungsvorrichtung (20) auf mindestens einem Datenträger gespeichert wird.

8. Verfahren nach Anspruch 1, bei welchem die Wahl der mindestens einen Multifunktionsvorrichtung (14) für eine neue Anwendung automatisch durch die mindestens eine Datenverarbeitungsvorrichtung (20) erreicht wird.

## Revendications

1. Procédé d'analyse et d'archivage d'au moins une bibliothèque de matériaux, comprenant au moins deux blocs de construction (12) dans au moins deux parties (13), qui comprend au moins les étapes suivantes :
(1) l'introduction des au moins deux blocs de construction (12) dans au moins deux parties (13) d'au moins un dispositif multifonction (14),
(2) l'identification des au moins deux blocs de construction (12) dans l'au moins un dispositif multifonction (14),
(3) l'analyse des au moins deux blocs de construction (12) pour au moins une caractéristique de performance, et
(4) l'archivage des blocs de construction (12) dans l'au moins un dispositif multifonctionnel (14),
comprenant en outre l'étape suivante : (b) le traitement des au moins deux blocs de construction (12) dans le dispositif multifonction (14) ;
dans lequel un bloc de construction est un corps porteur en trois dimensions capable de contenir des substances et en outre est une unité simple située dans des parties séparées respectives de la bibliothèque de matériaux, et dans lequel l'identification des au moins deux blocs de construction est effectuée en déterminant la concentration ou le taux de concentration d'un ou de plusieurs isotopes ou d'un ou plusieurs éléments chimiques, dans lequel le dispositif multifonction (14) avec les au moins deux blocs de construction (12) est utilisé plusieurs fois lors des étapes (3), (4) et/ou (b), avec les informations déjà stockées étant utilisées dans chaque nouvelle application.

2. Procédé selon la revendication 1 qui comprend en outre l'étape (0) suivante :
(0) la fabrication d'au moins deux blocs de construction (12).

3. Procédé selon la revendication 1 ou la revendication 2 qui comprend en outre l'étape (a) suivante :
(a) le scellement de l'au moins un dispositif multifonctionnel (14).

4. Procédé selon une des revendications précédentes dans lequel l'identification des au moins deux blocs de construction (12) est effectuée en utilisant un ou plusieurs procédés d'analyse, choisis dans le groupe de la spectroscopie XRF, XRD, IR, Raman, RFA, de la spectroscopie UV/VIS, de la détection de rayonnement riche en énergie, de la spectroscopie NMR-, ESR-, Mösbauer, des procédés SIMS et optiques, GDMS, MS en combinaison avec des procédés d'ablation laser.

5. Procédé selon l'une des revendications précédentes dans lequel au moins une des étapes (1), (2), (3), (4), (0), (a) ou (b), est/sont menée(s) d'une manière totalement ou partiellement automatisée.

6. Procédé selon l'une des revendications précédentes dans lequel le procédé est commandé/régulé par au moins un dispositif (20) de traitement de données.

7. Procédé selon l'une des revendications précédentes dans lequel les informations sur l'identification des au moins blocs de construction (12) menée lors de l'étape (2) sont stockées dans l'au moins un dispositif (20) de traitement de données sur au moins un support de données.

8. Procédé selon la revendication 1 dans lequel le choix de l'au moins un dispositif multifonction (14) pour une nouvelle application est effectué automatiquement par l'au moins un dispositif (20) de traitement de données.
